# EUROPÄISCHE PATENTSCHRIFT

(11) **EP 3 250 833 B1**
(45) Veröffentlichungstag und Bekanntmachung des Hinweises auf die Patenterteilung: **01.04.2020**
(21) Anmeldenummer: 15816083.8
(22) Anmeldetag: 16.11.2015
(51) Int. Cl.: F16B 25/00, F16H 57/02, F16B 43/00

(54) **GETRIEBE MIT GEHÄUSETEIL UND SCHRAUBE**
TRANSMISSION COMPRISING A HOUSING PART AND SCREW
BOÎTE DE VITESSES AVEC PARTIE BOÎTIER ET VIS

(30) Priorität: 30.01.2015 DE 102015001097
(43) Veröffentlichungstag der Anmeldung: 06.12.2017
(73) Patentinhaber: SEW-EURODRIVE GmbH & Co. KG, 76646 Bruchsal (DE)
(72) Erfinder: BÜHN, Oliver, 76703 Kraichtal (DE); TEGELTIJA, Miki, 76689 Karlsdorf-Neuthardt (DE)
(86) Internationale Anmeldenummer: PCT/EP2015/002282
(87) Internationale Veröffentlichungsnummer: WO 2016/119800

(56) Entgegenhaltungen:
- DE-U1-202013 101 699
- FR-A1- 2 763 369
- US-A1- 2008 135 335

## Beschreibung

Die Erfindung betrifft ein Getriebe mit Gehäuseteil und Schraube.

Es ist allgemein bekannt, dass ein Getriebe Schmierstoff zum Schmieren der in Eingriff stehenden Verzahnungen und zum Schmieren der Lager des Getriebes aufweist.

Aus der FR 2 763 369 A1 ist als nächstliegender Stand der Technik eine Befestigungsmethode gezeigt.

Aus der DE 20 2013 101 699 U1 ist eine Antriebseinrichtung bekannt.

Aus der US 2008/0135335 A1 ist eine Verschlussschraube bekannt.

Der Erfindung liegt daher die Aufgabe zugrunde, die Herstellung eines Getriebes kostengünstig ausführbar zu machen.

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit Gehäuseteil und Schraube ausgeführt ist,
wobei das Gehäuseteil eine durchgehende Bohrung aufweist, in welche die Schraube eingeschraubt ist,
insbesondere wobei der Innenraum des Getriebes Schmierstoff, wie Öl, Fett oder Schmierfett, aufweist,
wobei die Schraube ein selbstfurchendes Gewinde aufweist.

Von Vorteil ist dabei, dass bei der Herstellung des Getriebes nur eine durchgehende Bohrung durch die Wandung des Gehäuses hergestellt werden muss - nicht aber ein Gewinde eingeschnitten werden muss. Denn beim Einführen der Schraube in die Bohrung furcht das Außengewinde des Gewindeabschnitts der Schraube ein Innengewinde in die Wandung der Bohrung. Dabei wird das Gewinde der Schraube derart dimensioniert und ausgelegt, dass bei diesem Furchen Material der Wandung plastisch verformt wird. Zusätzlich wird auch eine elastische Verformung bewirkt, die zur Verliersicherung der Schraube verwendet ist.

Die Schraube weist einen Schraubenkopf auf, wobei an der Unterseite des Schraubenkopfs eine Ringnut angeordnet ist, in welcher zumindest teilweise ein Ringteil, also Dichtungsring, angeordnet ist, der somit zwischen Schraubenkopf und Gehäuseteil angeordnet ist, zur verliersicheren Anordnung des Ringteils in der Ringnut,
wobei die Schraube einen Gewindeabschnitt aufweist, an dessen axialem Endbereich der Schraubenkopf angeordnet ist. Von Vorteil ist dabei, dass die Bohrung abgedichtet ist und somit nur beim Herausschrauben ein Ablassen des Schmierstoffes bewirkbar ist. Bei eingeschraubter Schraube ist mittels des Ringteils eine hohe Schutzart erreicht.

Das Gehäuseteil ist aus einem weicheren Material gefertigt als die Schraube,
wobei die Schraube aus Stahl und das Gehäuseteil aus Aluminium gefertigt ist. Von Vorteil ist dabei, dass das selbstfurchende Gewinde in einfacher Art und Weise herstellbar ist.

Bei einer vorteilhaften Ausgestaltung ist das Ringteil aus einem Gummi, NBR und/oder EPDM gefertigt. Von Vorteil ist dabei, dass eine hohe Schutzart in kostengünstiger Weise bewirkbar ist.

Das Ringteil weist einen quadratischen Querschnitt auf. Von Vorteil ist dabei, dass eine große Anlagefläche erreichbar ist und somit auch eine hohe Schutzart bewirkbar ist.

Das Gewinde der Bohrung ist von der selbstfurchenden Schraube durch plastische Verdrängung erzeugt. Von Vorteil ist dabei, dass bei der Herstellung des Getriebes ein Arbeitsgang, nämlich das Einschneiden eines Gewindes mittels eines Werkzeugs einsparbar ist.

Bei einer vorteilhaften Ausgestaltung ist das Ringteil konzentrisch zum Gewindeabschnitt angeordnet. Von Vorteil ist dabei, dass der Schraubenkopf in Umfangsrichtung gleichmäßig am Ringteil anliegt und dieses in axialer Richtung, also in Richtung der Schraubenachse, gegen das Gehäuseteil drückt und auf diese Weise eine hohe Schutzart bewirkt.

Das Ringteil ist ein Dichtring. Von Vorteil ist dabei, dass eine einfache kostengünstige Herstellung ermöglicht ist.

Die Schraube ist im Gewinde gehalten mittels der Federkraft elastisch verformten Materials des Ringteils. Von Vorteil ist dabei, dass weitere Teile zur Verliersicherung einsparbar sind.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe, solange diese im durch die Patentansprüche bestimmten Schutzbereich liegen.

Die Erfindung wird nun anhand von Abbildungen näher erläutert:

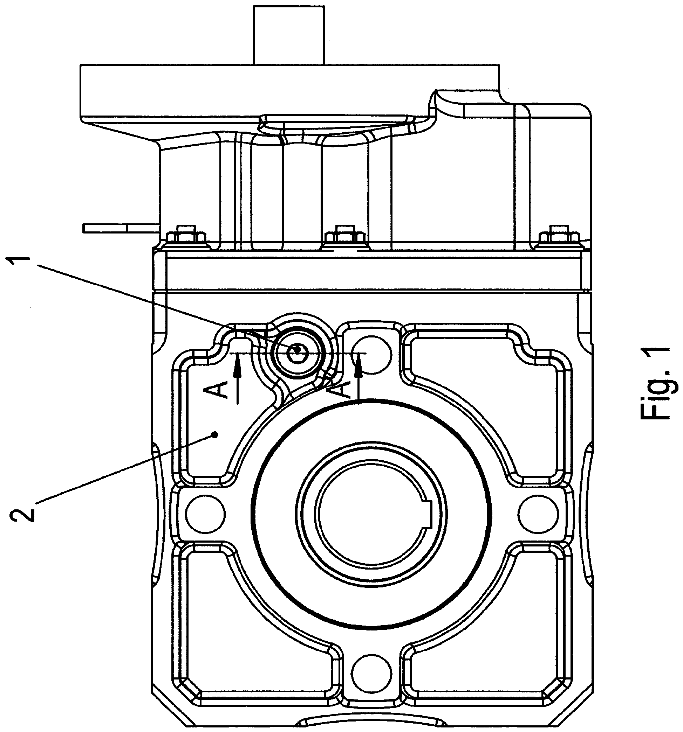

In der Figur 1 ist ein erfindungsgemäßes Getriebe mit Verschlussschraube 1 in Seitenansicht dargestellt.

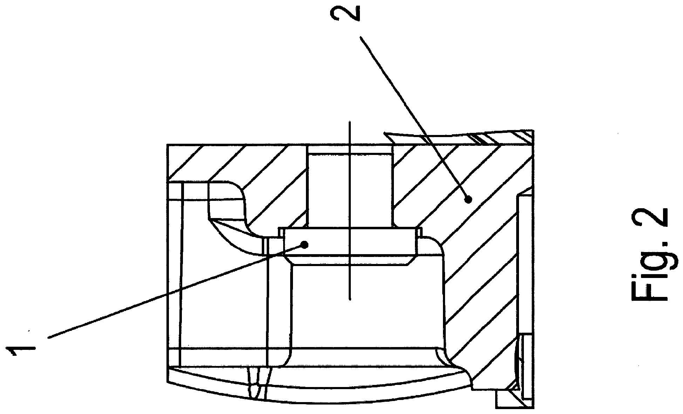

In der Figur 2 ist ein Querschnitt durch einen die Verschlussschraube 1 umgebenden Bereich des Gehäuseteils 2 in Seitenansicht dargestellt.

Wie in den Figuren dargestellt, weist das Gehäuseteil 2 eine durchgehende Bohrung auf, welche durch eine Schraube 1 dicht verschlossen ist.

Hierzu weist die Schraube einen Schraubenkopf und einen Gewindeabschnitt auf. Dabei ist der Gewindeabschnitt derart ausgeführt, dass die schraube selbstfurchend ist. Beim Einschrauben der Schraube 1 in die durchgehende Bohrung wird also von dem Gewinde, insbesondere von Zähnen des Gewindeabschnitts Material des Gehäuseteils 2 plastisch verdrängt, so dass die schraube sich das sie selbst aufnehmende Gewinde selbst einformt ins Gehäuseteil.

Der Schraubenkopf ist radial zur Schraubenachse weiter ausgedehnt als der Gewindeabschnitt.

An der Unterseite des Schraubenkopfes, also an der dem ist eine konzentrisch zur Schraubenachse ausgerichtete Ringnut ausgeformt, in welche ein entsprechend geformtes Ringteil zumindest teilweise eingelegt ist.

Die Schraubenachse ist vorzugsweise die Ringachse des Ringteils und/oder der Ringnut.

Das Ringteil ist aus Kunststoff oder in bevorzugter Ausführungsform aus Gummi ausgeführt. Hierbei eignet sich auch ein NBR oder EPDM als Gummi.

Beim selbstfurchendem Einschrauben in die Bohrung wird das aus der Ringnut zum Getriebegehäuseteil 2 teilweise hervorstehende Ringteil auf das Gehäuseteil 2 gepresst und somit eine dichte Verbindung erreicht. Dabei wird das Ringteil elastisch verformt.

Somit ist also eine höhere Schutzart erreichbar.

Die Schraube ist aus einem härteren Material gefertigt wie das Gehäuseteil. Es wird Metall verwendet. Die Schraube ist aus Stahl und das Gehäuseteil aus Aluminium.

Somit ist die durchgehende Bohrung dicht verschlossen und es kann kein Schmierstoff des Getriebes, wie Öl, Fließfett oder dergleichen, vom Innenraum des Getriebes durch die Bohrung in die äußere Umgebung des Getriebes gelangen.

Der Querschnitt des Ringteils ist quadratisch.

### Bezugszeichenliste

- 1: Schraube mit Schraubenkopf und Gewindeabschnitt
- 2: Gehäuseteil

## Patentansprüche

1. Getriebe mit Gehäuseteil (2) und Schraube (1),
wobei das Gehäuseteil (2) eine durchgehende Bohrung aufweist, in welche die Schraube (1) eingeschraubt ist,
insbesondere wobei der Innenraum des Getriebes Schmierstoff, wie Öl, Fett oder Schmierfett, aufweist,
wobei die Schraube (1) ein selbstfurchendes Gewinde aufweist,
wobei die Schraube (1) einen Schraubenkopf aufweist, wobei an der Unterseite des Schraubenkopfs eine Ringnut angeordnet ist, in welcher zumindest teilweise ein Ringteil, also Dichtungsring, angeordnet ist, der somit zwischen Schraubenkopf und Gehäuseteil (2) angeordnet ist zur verliersicheren Anordnung des Ringteils in der Ringnut,
wobei die Schraube (1) einen Gewindeabschnitt aufweist, an dessen axialem Endbereich der Schraubenkopf angeordnet ist,
wobei das Gehäuseteil (2) aus einem weicheren Material gefertigt ist als die Schraube (1),
wobei die Schraube (1) aus Stahl und das Gehäuseteil (2) aus Aluminium gefertigt ist,
wobei das Ringteil einen quadratischen Querschnitt aufweist,
wobei das Gewinde der Bohrung von der selbstfurchenden Schraube (1) durch plastische Verdrängung erzeugt ist,
wobei die Schraube (1) im Gewinde gehalten ist mittels der Federkraft elastisch verformten Materials des Ringteils.

2. Getriebe nach Anspruch 1,
**dadurch gekennzeichnet, dass**
das Ringteil aus einem Gummi, NBR und/oder EPDM gefertigt ist.

3. Getriebe nach mindestens einem der vorangegangenen Ansprüche,
**dadurch gekennzeichnet, dass**
das Ringteil konzentrisch zum Gewindeabschnitt angeordnet ist.

## Claims

1. A gear unit with housing part (2) and screw (1),
wherein the housing part (2) has a continuous bore into which the screw (1) is screwed,
in particular wherein the interior of the gear unit comprises lubricant, such as oil, grease or lubricating grease,
wherein the screw (1) has a self-tapping thread,
wherein the screw (1) has a screw head,
wherein an annular groove is arranged on the underside of the screw head, in which groove a ring part, i.e. sealing ring, is arranged at least in part, which is thus arranged between the screw head and housing part (2) for captively arranging the ring part in the annular groove,
wherein the screw (1) has a threaded portion on the axial end region of which the screw head is arranged,
wherein the housing part (2) is manufactured from a softer material than the screw (1),
wherein the screw (1) is manufactured from steel and the housing part (2) from aluminium,
wherein the ring part has a square cross-section,
wherein the thread of the bore is produced by the self-tapping screw (1) by plastic displacement,
wherein the screw (1) is held in the thread by means of the spring force of elastically deformed material of the ring part.

2. A gear unit according to Claim 1,
**characterised in that**
the ring part is manufactured from a rubber, NBR and/or EPDM.

3. A gear unit according to at least one of the preceding claims,
**characterised in that**
the ring part is arranged concentrically to the threaded portion.

## Revendications

1. Transmission comprenant une partie (2) formant carter, et une vis (1),
ladite partie (2), formant carter, présentant un perçage traversant dans lequel ladite vis (1) est vissée,
sachant notamment que l'espace interne de ladite transmission renferme un lubrifiant tel que de l'huile, de la graisse ou de la graisse lubrifiante,
ladite vis (1) étant munie d'un filetage autotaraudeur,
laquelle vis (1) comporte une tête,
sachant qu'une rainure annulaire située à la face inférieure de la tête de ladite vis loge, au moins en partie, une pièce annulaire, c'est-à-dire une bague d'étanchement qui est ainsi interposée entre ladite tête de la vis et ladite partie (2) formant carter, pour la mise en place imperdable de ladite pièce annuaire dans ladite rainure annulaire,
ladite vis (1) étant pourvue d'un tronçon fileté, dans la région extrême axiale duquel la tête de ladite vis est disposée,
la partie (2), formant carter, étant fabriquée en un matériau plus tendre que celui de la vis (1),
ladite vis (1) étant fabriquée en acier, et ladite partie (2) formant carter étant fabriquée en aluminium,
sachant que la pièce annulaire présente une section transversale carrée,
le filetage du perçage étant produit par la vis autotaraudeuse (1), par refoulement plastique,
ladite vis (1) étant retenue dans ledit filetage sous l'action de la force élastique du matériau de la pièce annulaire, déformé élastiquement.

2. Transmission selon la revendication 1,
**caractérisée par le fait que**
la pièce annulaire est fabriquée en un caoutchouc, en NBR et/ou en EPDM.

3. Transmission selon au moins l'une des revendications précédentes,
**caractérisée par le fait que**
la pièce annulaire est disposée concentriquement au tronçon fileté.
